# FASCICULE DE BREVET EUROPEEN

(11) **EP 1 156 645 B1**
(45) Date de publication et mention de la délivrance du brevet: **14.11.2007**
(21) Numéro de dépôt: 01401169.6
(22) Date de dépôt: 07.05.2001
(51) Int. Cl.: H04M 1/60, H04B 1/38

(54) **Ensemble d'un téléphone cellulaire et d'un véhicule automobile.**
Anordnung von einem zellularem Telefon und einem Kraftfahrzeug.
Assembly of a cellular telephone and a motor vehicle.

(30) Priorité: 16.05.2000 FR 0006209
(43) Date de publication de la demande: 21.11.2001
(73) Titulaire: SAGEM Communication, 75015 Paris (FR)
(72) Inventeur: Staebler, Patrick, 78450 Villepreux (FR)
(74) Mandataire: Bloch, Gérard

(56) Documents cités:
- EP-A- 1 049 347
- WO-A-97/27697
- WO-A-98/57824
- WO-A-99/66647
- GB-A- 2 264 613
- US-A- 6 026 162

## Description

L'utilisation d'un téléphone cellulaire par un conducteur de véhicule automobile s'avère dangereuse. Pour rendre cette utilisation moins dangereuse, le conducteur peut utiliser un kit main libre, comprenant un microphone et un haut-parleur, reliés au téléphone cellulaire et placés dans le véhicule à proximité du conducteur. Un tel kit permet à l'utilisateur de téléphoner avec les mains libres, sans tenir le téléphone près de son oreille. Toutefois, cette solution ne supprime pas tout maniement du téléphone. L'utilisateur est en effet toujours contraint d'effectuer certaines manipulations notamment pour appeler un correspondant, prendre un appel entrant et lire le contenu de l'écran du téléphone. Des kits mains libres pour un véhicule sont divulgués par exemple par les documents WO98/57824 et GB 2264613.

La présente invention propose de rendre encore moins dangereuse l'utilisation d'un téléphone cellulaire dans un véhicule automobile

A cet effet, l'invention concerne un ensemble d'un téléphone cellulaire et d'un véhicule automobile selon la revendication 1.

Ainsi, on utilise l'écran, le clavier, le haut-parleur et le microphone du véhicule, qui présentent l'avantage d'être agencés pour une utilisation facile et sans danger par le conducteur, comme interface homme-machine déportée du téléphone.

Avantageusement, le véhicule comprend des moyens de détection de la présence du téléphone dans l'habitacle du véhicule.

Grâce à cela, le doublement de l'interface homme-machine du téléphone par celle du véhicule peut se faire de façon automatique, sans intervention de l'utilisateur, sur détection du téléphone dans l'habitacle.

Les moyens de détection de la présence du téléphone peuvent être activés sur détection de l'ouverture d'une porte du véhicule ou sur détection de la mise du contact du véhicule. Grâce à cela, ils ne fonctionnent que lorsque cela est nécessaire, c'est-à-dire lorsque le véhicule est utilisé.

Dans une forme de réalisation particulière, il est prévu des moyens de liaison radio entre l'interface homme-machine du véhicule et le téléphone.

Dans ce cas, et avantageusement, le véhicule comprend un module de base téléphonique radio et le téléphone cellulaire comprend un module de combiné téléphonique radio, le téléphone étant ainsi agencé pour se relier à l'interface homme-machine du véhicule par appariement de son module de combiné radio et du module de base téléphonique radio du véhicule.

L'invention sera mieux comprise à l'aide de la description suivante d'une forme de réalisation particulière de l'ensemble de l'invention en référence au dessin annexé sur lequel:
- la figure 1 représente un schéma bloc fonctionnel de l'ensemble et
- la figure 2 représente un schéma bloc fonctionnel du téléphone de l'ensemble de la figure 1.

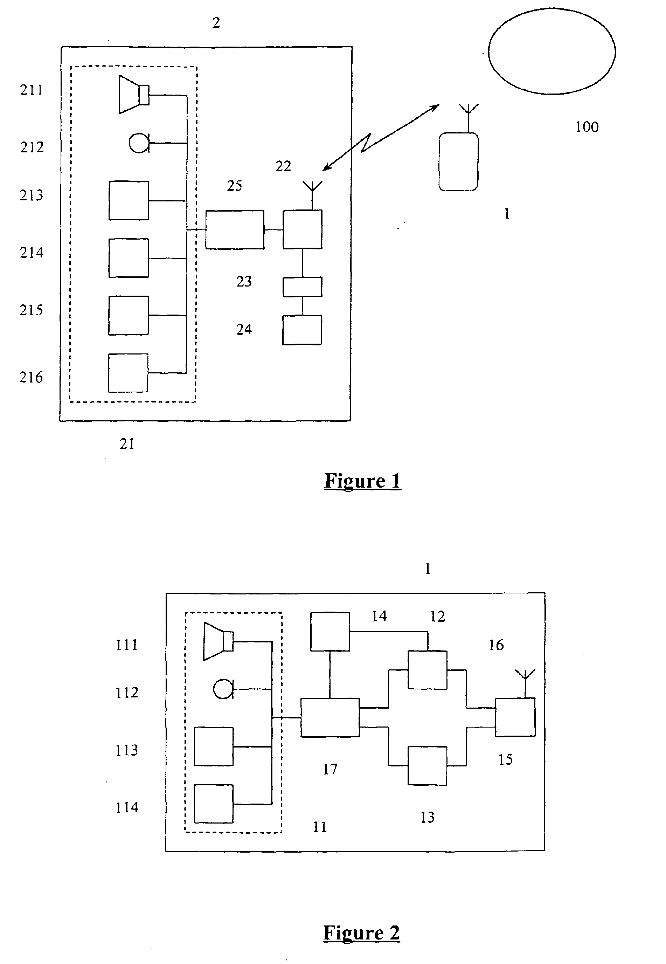

L'ensemble de l'invention, représenté sur la figure 1, comprend un téléphone bimode cellulaire / sans fil 1, ici GSM / DECT, et un véhicule automobile.

Le véhicule automobile comprend un terminal de bord 2 comportant une interface homme-machine 21, un module de base téléphonique radio DECT 22 et un bloc central de commande 25, en l'espèce un microprocesseur.

L'interface homme-machine 21 comprend un haut-parleur 211, un microphone 212, un écran d'affichage 213, un clavier de saisie 214, un bloc de reconnaissance vocale 215, permettant la saisie vocale de données et de commande, et un bloc de synthèse vocale 216, permettant la diffusion vocale de données et de commande.

Le module de base DECT 22 comprend les éléments classiques d'une base DECT, à l'exclusion des éléments d'interface homme-machine. Le module de base DECT 22 est notamment agencé pour émettre des signaux de balise DECT, afin de détecter la présence d'un combiné DECT dans une cellule déterminée occupant ici l'habitacle du véhicule, et, en cas de détection d'un combiné DECT dans l'habitacle, pour s'apparier à ce combiné DECT et pour communiquer avec lui par liaison radio.

Le terminal de bord 2 comprend en outre un détecteur 24 d'une action d'utilisation ou de fin d'utilisation du véhicule et un bloc 23 d'activation/désactivation du module de base DECT 22, interposé entre le détecteur 24 et le module 22. Le détecteur 24 est destiné à détecter l'ouverture/fermeture des portes du véhicule, le verrouillage/déverrouillage des portes ainsi que l'état du véhicule (marche ou arrêt). Le module de base DECT 22 est activé sur détection de l'ouverture d'au moins une porte et désactivé sur détection de l'arrêt du véhicule et du verrouillage de toutes les portes.

Tous les éléments du terminal 2 sont reliés au microprocesseur 25.

Le téléphone GSM/DECT 1 comprend une interface homme-machine 11, un module de combiné DECT 12, un module de téléphone GSM 13 et un bloc central de commande 17, en l'espèce un microprocesseur.

L'interface homme-machine 11 comprend un haut-parleur 111, un microphone 112, un écran d'affichage 113 et un clavier de saisie 114.

Le module de téléphone GSM 13 et le module de combiné DECT 12 partagent ici un bloc radio commun 15, relié au deux modules 12, 13 et auquel est connectée une antenne radio 16, pouvant fonctionner simultanément en mode DECT et en mode GSM.

Le module de téléphone GSM 13, en coopération avec le bloc radio 15, permet au téléphone 1de communiquer en mode GSM, c'est-à-dire en utilisant le protocole de communication GSM, à travers un réseau téléphonique GSM 100.

Le module de combiné radio DECT 12, en coopération avec le bloc radio 15, permet au téléphone 1 de faire fonction de combiné DECT et de s'apparier à une base DECT et de communiquer avec elle en mode DECT, en utilisant le protocole de communication DECT.

Le téléphone 1 comprend en outre un bloc 14, relié au module de téléphone DECT 12, destiné à détecter si le module de combiné DECT 12 est apparié ou non au module de base DECT 22 du véhicule automobile. Le bloc 14 est agencé pour commander la désactivation de l'interface homme-machine 11 du téléphone 1 et le doublement intégral de l'interface 11 du téléphone 1 par l'interface 21 du véhicule, en cas d'appariement des modules DECT 22 et 12, et l'activation de l'interface homme-machine 11 du téléphone 1, en cas d'interruption de la liaison radio DECT entre les modules DECT 12 et 22.

Tous les éléments du téléphone 1 sont connectés au microprocesseur 17, destiné à commander le fonctionnement du téléphone 1.

On soulignera ici que le téléphone 1 est agencé pour fonctionner simultanément en mode DECT et en mode GSM.

Après la description structurelle et fonctionnelle de l'ensemble de l'invention, son fonctionnement va maintenant être décrit.

Un utilisateur, situé en dehors du véhicule mais dans la zone de couverture du réseau GSM 100, met en marche le téléphone 1. Le téléphone 1 se connecte alors au réseau GSM 100.

L'utilisateur ouvre ensuite une porte du véhicule et pénètre dans l'habitacle. Sur détection de l'ouverture de la porte par le détecteur 24, le bloc 23 active le module de base DECT 22. Celui-ci émet alors des signaux de balise DECT.

Lorsque le téléphone 1 pénètre dans l'habitacle, son module de combiné DECT 12 détecte les signaux de balise DECT et s'apparie alors au module de base DECT 22. On relie ainsi le téléphone 1 au terminal de bord 2, et donc à l'interface homme-machine 21 du véhicule, par une liaison radio DECT.

Après appariement du module de combiné DECT 12 et du module de base DECT 22, le bloc 14 fournit au microprocesseur 17 une commande pour désactiver l'interface homme-machine 11 et pour la doubler intégralement à l'aide de celle 21 du terminal de bord 2. Tous les éléments 111-114 de l'interface homme-machine 11 du téléphone sont alors désactivés, le téléphone 1 utilisant à la place les éléments 211-216 de l'interface homme-machine 21 du véhicule. L'interface homme-machine 21 du véhicule fait ainsi fonction d'interface homme-machine déportée du téléphone 1. Les données saisies à l'aide du microphone 212 et du clavier 214 sont transmises au téléphone 1, par l'intermédiaire de la liaison radio DECT, et sont traitées par le téléphone 1 comme des données saisies à l'aide du microphone 112 et du clavier 114. De même, les données normalement destinées à être diffusées par le haut-parleur 111 ou à être affichées sur l'écran 113 sont transmises au terminal de bord 2, par l'intermédiaire de la liaison radio DECT, et sont diffusées par le haut-parleur 211 ou affichées sur l'écran 213.

L'utilisateur peut activer la fonction de reconnaissance vocale et/ou celle de synthèse vocale. Il peut ainsi saisir des données, par exemple appeler un correspondant, en utilisant le microphone 212 et le bloc de reconnaissance vocale 215, à la place du clavier 214. Le haut-parleur 211, en coopération avec le bloc de synthèse vocale 216, peut également diffuser des données, par exemple le nom de l'appelant en cas de réception d'un appel, qui s'affichent normalement sur l'écran 213.

En cas de réception d'un appel GSM par le téléphone 1, le module de combiné DECT 12 du téléphone 1 transmet au module de base DECT 22 du véhicule une signalisation d'appel entrant et le module DECT 22 commande alors l'émission d'une sonnerie.

Pour appeler un correspondant, l'utilisateur compose son numéro d'appel téléphonique, à l'aide du clavier 214. L'utilisateur peut également accéder à l'annuaire téléphonique du téléphone 1, à l'aide du clavier 214 et de l'écran 213, et y sélectionner le nom d'un correspondant à appeler.

Lors d'une communication téléphonique du téléphone 1 à travers le réseau GSM 100, l'utilisateur utilise l'interface homme-machine 21 du véhicule, et notamment le microphone 212 et le haut-parleur 211, à la place de l'interface 11 du téléphone 1.

Lorsque l'utilisateur arrête son véhicule puis en sort en verrouillant les portes, le détecteur 24 détecte l'arrêt du véhicule et le verrouillage des portes et commande alors la désactivation du module de base DECT 22. Sur détection de l'interruption de la liaison radio entre le module de base DECT 22 et le module de combiné DECT 12, le bloc 14 commande l'activation de l'interface homme-machine 11, qui devient alors à nouveau opérationnelle.

Dans la description qui précède, le téléphone 1 et l'interface homme-machine 21 du véhicule sont reliés par une liaison radio DECT, par l'intermédiaire du module de base DECT 22 et du module de combiné DECT. Ils pourraient être reliés par tout autre type de liaison radio de courte portée, par exemple par une liaison bluetooth.

En outre, le téléphone 1 pourrait être agencé pour fonctionner dans un mode cellulaire, autre que le mode GSM.

## Revendications

1. Ensemble d'un téléphone cellulaire (1) et d'un véhicule automobile, comprenant, chacun, une interface homme-machine (11, 21) et des moyens (22, 12, 14) pour doubler l'interface homme-machine (11) du téléphone (1) à l'aide de celle (21) du véhicule, qui fait ainsi fonction d'interface homme-machine déportée du téléphone (1), **caractérisé par le fait que** le véhicule comprend des moyens (24) de détection d'une action d'utilisation du véhicule, destinés à commander l'activation de moyens (22) de détection de la présence du téléphone (1) et des moyens (24) de détection d'une action de fin d'utilisation du véhicule, destinés à commander la désactivation des moyens (22) de détection de la présence du téléphone (1).

2. Ensemble selon la revendication 1, dans lequel les moyens (22) de détection de la présence du téléphone (1) sont dans l'habitacle du véhicule.

3. Ensemble selon l'une des revendications 1 et 2, dans lequel il est prévu des moyens (22, 12, 15, 16) de liaison radio entre l'interface homme-machine (21) du véhicule et le téléphone (1).

4. Ensemble selon la revendication 3, dans lequel le véhicule comprend un module de base téléphonique radio (22) et le téléphone cellulaire (1) comprend un module de combiné téléphonique radio (12), le téléphone (1) étant ainsi agencé pour se relier à l'interface homme-machine (21) du véhicule par appariement de son module de combiné radio (12) et du module de base téléphonique radio (22) du véhicule.

5. Ensemble selon la revendication 4, dans lequel le véhicule comprend un module de base DECT (22) et le téléphone (1) comprend un module de combiné DECT (12).

6. Ensemble selon l'une des revendications 1 à 5, dans lequel l'interface homme-machine (21) du véhicule est celle d'un terminal de bord (2) du véhicule.

## Claims

1. Assembly of a cellular telephone (1) and an automotive vehicle, each comprising a man-machine interface (11, 21) and means (22, 12,14) for duplicating the man-machine interface (11) of the telephone (1) with the help of that (21) of the vehicle which thus performs the function of a man-machine interface carried by the telephone (1), **characterised by** the fact that the vehicle comprises means (24) for detecting an action of use of the vehicle, intended to control the activation of means (22) for detecting the presence of the telephone (1), and means (24) for detecting an action of end of use of the vehicle, intended to control the deactivation of the means (22) for detecting the presence of the telephone (1).

2. Assembly according to claim 1, in which the means (22) for detecting the presence of the telephone (1) are in the passenger compartment of the vehicle.

3. Assembly according to one of the claims 1 and 2, in which there are provided means (22, 12, 15, 16) for a radio link between the man-machine interface (21) of the vehicle and the telephone (1).

4. Assembly according to claim 3, in which the vehicle comprises a radio telephone base module (22) and the cellular telephone (1) comprises a radio telephone handset module (12), the telephone (1) thus being designed to be connected to the man-machine interface (21) of the vehicle by pairing the radio handset module (12) thereof and the radio telephone base module (22) of the vehicle.

5. Assembly according to claim 4, in which the vehicle comprises a DECT base module (22) and the telephone (1) comprises a DECT handset module (12).

6. Assembly according to one of the claims 1 to 5, in which the man-machine interface (21) of the vehicle is that of an on-board terminal (2) of the vehicle.

## Patentansprüche

1. Anordnung eines Mobiltelefons (1) und eines Kraftfahrzeugs, umfassend jeweils eine Mensch-Maschinen-Schnittstelle (11, 21) und Mittel (22, 12, 14) zur Verdopplung der Mensch-Maschinen-Schnittstelle (11) des Telefons (1) mit Hilfe derjenigen (21) des Fahrzeugs, die somit als verschobene Mensch-Maschinen-Schnittstelle des Telefons (1) dient, **dadurch gekennzeichnet, dass** das Fahrzeug Mittel (24) zum Erfassen eines Verwendungsvorgangs des Fahrzeugs umfasst, die dazu bestimmt sind, die Aktivierung von Mitteln (22) zur Erfassung des Vorhandenseins des Telefons (1) zu bewirken, sowie Mittel (24) zum Erfassen eines Verwendungsendes des Fahrzeugs, die dazu bestimmt sind, die Deaktivierung der Mittel (22) zur Erfassung des Vorhandenseins des Telefons (1) zu bewirken.

2. Anordnung nach Anspruch 1, bei der die Mittel (22) zur Erfassung des Vorhandenseins des Telefons (1) sich im Karosseriegehäuse des Fahrzeugs befinden.

3. Anordnung nach einem der Ansprüche 1 und 2, bei der Mittel (22, 12, 15, 16) zur Funkverbindung zwischen der Mensch-Maschinen-Schnittstelle (21) des Fahrzeugs und dem Telefon (1) vorgesehen sind.

4. Anordnung nach Anspruch 3, bei der das Fahrzeug ein Funkfernsprech-Basismodul (22) umfasst und das Mobiltelefon (1) ein Funkfernsprech-Handapparatmodul (12) umfasst, wobei das Telefon (1) auf diese Weise dafür ausgebildet ist, sich mit der Mensch-Maschinen-Schnittstelle (21) des Fahrzeugs durch Paarung seines Funkhandapparat-Moduls (12) und des Funkfernsprech-Basismoduls (22) des Fahrzeugs zu verbinden.

5. Anordnung nach Anspruch 4, bei der das Fahrzeug ein DECT-Basismodul (22) umfasst und das Telefon (1) ein DECT-Handapparatmodul (12) umfasst.

6. Anordnung nach einem der Ansprüche 1 bis 5, bei der die Mensch-Maschinen-Schnittstelle (21) des Fahrzeugs diejenige eines Bordterminals (2) des Fahrzeugs ist.
